(19) **Europäisches Patentamt / European Patent Office / Office européen des brevets**

(11) **EP 3 162 111 B1**

(12) **FASCICULE DE BREVET EUROPEEN**

(45) Date de publication et mention de la délivrance du brevet:
**24.04.2019 Bulletin 2019/17**

(51) Int Cl.:
***H04L 12/26*** (2006.01)  ***H04L 12/24*** (2006.01)
***H04W 24/08*** (2009.01)

(21) Numéro de dépôt: **15753712.7**

(22) Date de dépôt: **25.06.2015**

(86) Numéro de dépôt international:
**PCT/FR2015/051721**

(87) Numéro de publication internationale:
**WO 2015/197987 (30.12.2015 Gazette 2015/52)**

(54) **PROCÉDÉ ET DISPOSITIF D'OBTENTION DE PAQUETS DE DONNÉES ÉMIS DANS UN RÉSEAU DE COMMUNICATION COMPRENANT UNE PLURALITÉ DE SOUS RÉSEAUX**

VERFAHREN UND VORRICHTUNG ZUM ERHALT VON IN EINEM KOMMUNIKATIONSNETZ MIT EINER VIELZAHL VON TEILNETZEN ÜBERTRAGENEN DATENPAKETEN

METHOD AND DEVICE FOR OBTAINING DATA PACKETS TRANSMITTED IN A COMMUNICATION NETWORK COMPRISING A PLURALITY OF SUB-NETWORKS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.06.2014 FR 1456052**

(43) Date de publication de la demande:
**03.05.2017 Bulletin 2017/18**

(73) Titulaire: **Orange**
**75015 Paris (FR)**

(72) Inventeurs:
• **JOSSET, Sébastien**
 **F-92170 Vanves (FR)**
• **ATI, Mohamed**
 **F-91130 Ris Orangis (FR)**
• **POSE, Laurent**
 **F-92310 Sevres (FR)**

(56) Documents cités:
**WO-A1-2012/091642**

• **"3rd Generation Partnership Project; Technical Specification Group Services and System Aspects; Telecommunication management; Subscriber and equipment trace; Trace data definition and management (Release 9)", 3GPP DRAFT; 32423-970, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 7 mars 2014 (2014-03-07), XP050840636, Extrait de l'Internet: URL:http://www.3gpp.org/ftp/tsg_sa/WG5_TM/ TSGS5_93/SA#63/specs/ [extrait le 2014-03-07]**

**Description**

La présente invention se rapporte au domaine général des communications.

Elle se rapporte plus particulièrement au traitement des données contenues dans des paquets de données émis par des équipements de communication à destination d'autres équipements de communication via un réseau de communication comportant une pluralité de sous réseaux.

Elle concerne plus particulièrement l'obtention de paquets de données échangés entre différents sous réseaux lors d'une communication. L'obtention de ces paquets permet notamment d'analyser le comportement de ces sous réseaux pendant la communication et en cas d'anomalie dans la transmission des paquets, de détecter quel est le sous réseau à l'origine de cette anomalie.

Parmi ces anomalies, on peut citer par exemple une perte de pages d'un fax ou une coupure intempestive d'une communication.

De façon connue, un réseau de communication peut comprendre plusieurs sous réseaux. Un tel sous réseau est par exemple un sous réseau client, un sous réseau d'accès, un sous réseau de collecte, un sous réseau coeur, un sous réseau d'interconnexion...

Ces sous réseaux sont strictement cloisonnés et administrés par des équipes différentes.

De ce fait, l'obtention de traces relatives à une communication, c'est-à-dire de paquets de données reçus par les différents sous réseaux est un processus laborieux impliquant la mise en place d'une équipe multi-services.

Chaque situation est réglée au cas par cas de façon manuelle et implique la mise en place de ponts de gestion de crise.

Le document WO 2012/091642 décrit un procédé pour le suivi d'abonnés sur la base d'informations d'historique d'erreurs. Le document 3GPP TS 32.423 V9.7.0 (2014-03) «3rd génération Partnership Project; Technical Aspects : Télécommunication management : Subscriber and equipment management; Trace data définition and management (release 9) » est relatif à la définition et la gestion de données de trace dans les communications.

Un des buts de l'invention est de remédier à des insuffisances/inconvénients de l'état de la technique et/ou d'y apporter des améliorations.

A cette fin, l'invention propose un procédé d'obtention de données relatives à des paquets de données échangés au cours d'au moins une communication dans un réseau comportant une pluralité de sous réseaux conforme à la revendication 1.

Le procédé de traitement se rapporte à une communication établie entre un premier terminal et un deuxième terminal dans un réseau comportant une pluralité de sous réseaux, au cours de laquelle des paquets de données sont échangés. Les paquets de données circulent ainsi via plusieurs sous réseaux du réseau.

Une requête générée par une entité d'un premier sous réseau permet d'obtenir une ou plusieurs réponses contenant des données relatives à des paquets de données reçus par un ou plusieurs autres sous réseaux du réseau.

Il est ainsi possible pour une entité d'un premier sous réseau d'obtenir des paquets de données reçus par d'autres sous réseaux.

Chaque réponse est élaborée par une entité d'un autre sous réseau.

La requête comporte au moins deux paramètres qui sont au moins une information temporelle définissant au moins un intervalle temporel et au moins un identifiant de terminal. Ces paramètres permettent à une entité d'un deuxième sous réseau de sélectionner des paquets de données émis ou reçus par un terminal pendant un ou plusieurs intervalle de temps choisis au niveau de la première entité.

Les réponses obtenues permettent à un opérateur du premier sous réseau de savoir si un paquet de données reçu au niveau du premier sous réseau a également été reçu par d'autres sous réseaux. Elles permettent notamment d'identifier des problèmes de transmission de paquets entre sous réseaux, typiquement des paquets de données qui ne parviennent pas au terminal destinataire. Elles permettent également de déterminer le sous réseau à l'origine d'un problème de transmission des paquets.

Selon un mode de réalisation particulier du procédé d'obtention, la requête générée est transmise à ladite au moins une deuxième entité dudit au moins un deuxième sous réseau via un deuxième réseau de communication.

La transmission de la commande via un deuxième réseau de communication est un moyen simple pour la première entité de communiquer avec une deuxième entité.

L'utilisation d'un deuxième réseau de communication permet à la première entité de joindre directement une deuxième entité sans passer par les autres sous réseaux. Ainsi, il est possible à la première entité de dialoguer avec une entité d'un deuxième sous réseau même en cas du problème intervenant dans le réseau de communication.

Selon un mode de réalisation particulier, le procédé d'obtention comporte une étape d'obtention d'au moins un deuxième ensemble de données datées extraites d'au moins un paquet de données, ledit au moins un paquet étant sélectionné par ladite première entité du premier sous réseau parmi une pluralité de paquets de données reçus par au moins une entité dudit premier réseau, en fonction de ladite d'au moins une information temporelle et dudit au moins un identifiant de terminal et une étape de classement des ensembles obtenus en fonction d'une date associée à chaque ensemble.

Le classement des ensembles reçus par une première entité et au moins une deuxième entité permet de mettre en évidence d'éventuelles interruptions dans le transport des paquets entre sous réseaux.

Selon une caractéristique particulière du procédé d'obtention, au moins une date d'au moins un ensemble est modifiée en fonction d'une information de décalage prédéterminée.

La modification d'une date d'un ensemble en fonction d'une information de décalage permet de prendre en compte une différence d'horloge entre deux entités.

La différence d'horloge peut provenir d'une désynchronisation entre les horloges de deux entités. Elle peut également intervenir lorsque les entités ne sont pas situées dans les mêmes fuseaux horaires et/ou lorsque l'heure locale est différente entre les deux entités.

Selon un mode de réalisation particulier du procédé d'obtention, la détermination de ladite information de décalage comprend une transmission à une entité d'un dit sous réseau, d'un signal donné et une réception dudit signal en provenance de ladite deuxième entité.

L'envoi par une première d'un signal donné à destination d'une deuxième entité suivi de la réception de ce signal en provenance de cette deuxième entité est un moyen simple d'obtenir une information de décalage d'horloge entre la première entité et la deuxième entité.

L'utilisation d'un signal connu permet à un opérateur de la première entité de repérer les ensembles de données relatifs aux paquets générés pour l'émission de ce signal.

Selon une caractéristique particulière du procédé d'obtention, lors de la transmission et de la réception dudit signal, ledit signal donné transite via au moins un sous réseau intermédiaire.

La circulation dudit signal via un sous réseau intermédiaire provoque la réception de paquets de données relatifs au signal par une entité du sous réseau intermédiaire.

L'obtention par la première entité d'ensembles de données relatifs aux paquets de données reçus par le sous réseau intermédiaire pour ce signal permettent de déterminer une information de décalage d'horloge entre la première entité et une entité de sous réseau intermédiaire apte à obtenir les dits ensembles de données.

L'invention se rapporte également à un procédé de traitement de données relatives à des paquets de données échangés au cours d'au moins une communication dans un réseau comportant une pluralité de sous réseaux conforme à la revendication 7.

L'invention se rapporte aussi à une entité d'un premier sous réseau d'un réseau de communication conforme à la revendication 8.

L'invention se rapporte aussi à une entité d'un deuxième sous réseau d'un réseau de communication conforme à la revendication 9.

Selon une implémentation préférée, les différentes étapes du procédé selon l'invention sont mises en oeuvre par un logiciel ou programme d'ordinateur.

L'invention concerne ainsi un logiciel ou programme, susceptible d'être exécuté par un ordinateur ou par un processeur de données, ce logiciel / programme comportant des instructions pour commander l'exécution des étapes d'un procédé de traitement. Ces instructions sont destinées à être stockées dans une mémoire d'un dispositif informatique, chargées puis exécutées par un processeur de ce dispositif informatique.

Ce logiciel / programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le dispositif informatique peut être mis en oeuvre par une ou plusieurs machines physiquement distinctes et présente globalement l'architecture d'un ordinateur, incluant des constituants d'une telle architecture: mémoire(s) de données, processeur(s), bus de communication, interface(s) matérielle(s) pour la connexion de ce dispositif informatique à un réseau ou un autre équipement, interface(s) utilisateur, etc.

L'invention concerne aussi un support d'informations lisible par un processeur de données, et comportant des instructions d'un programme tel que mentionné ci-dessus. Le support d'informations peut être n'importe quelle entité ou dispositif capable de stocker le programme.

D'autres particularités et avantages de la présente invention apparaitront dans la description suivante d'un mode de réalisation donné à titre d'exemple non limitatif, en référence aux dessins annexés, dans lesquels :

- la figure 1 est un schéma illustrant un système selon un mode de réalisation de l'invention,
- la figure 2 est un organigramme illustrant les différentes étapes d'un procédé d'obtention et d'un procédé de traitement selon un mode de réalisation de l'invention,
- la figure 3 est un organigramme illustrant une étape de détermination de valeur d'écarts, selon un mode de réalisation de l'invention,
- la figure 4 illustre un exemple de tableau comportant des temps de réception selon un selon un mode de réalisation de l'invention,

- la figure 5 est un schéma illustrant un premier dispositif de traitement selon un mode de réalisation de l'invention,
- la figure 6 est un schéma illustrant un deuxième dispositif de traitement selon un mode de réalisation de l'invention.

L'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit ci-dessous pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou avec processeur intégré pour l'exécution de logiciel, par exemple un circuit intégré, une carte à puce, une carte électronique pour l'exécution d'un micrologiciel (firmware), etc.

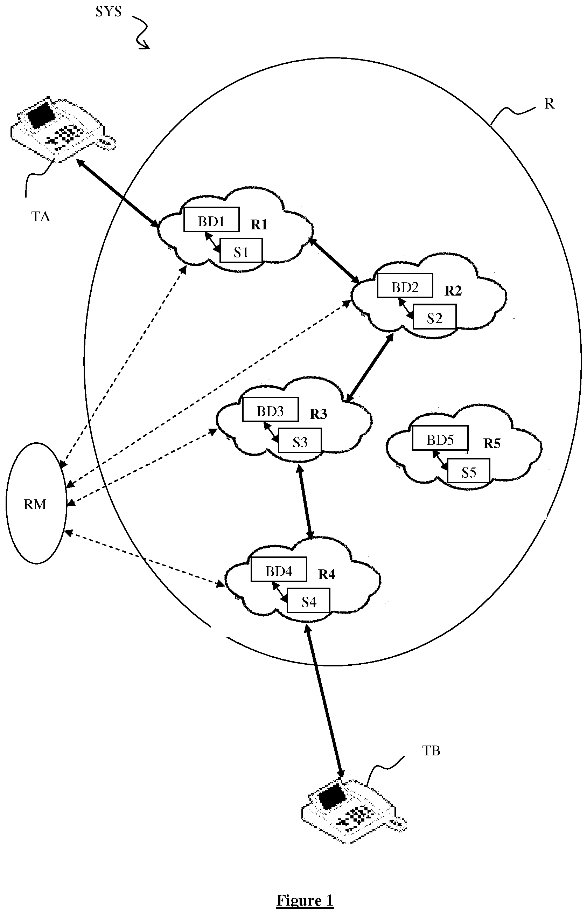

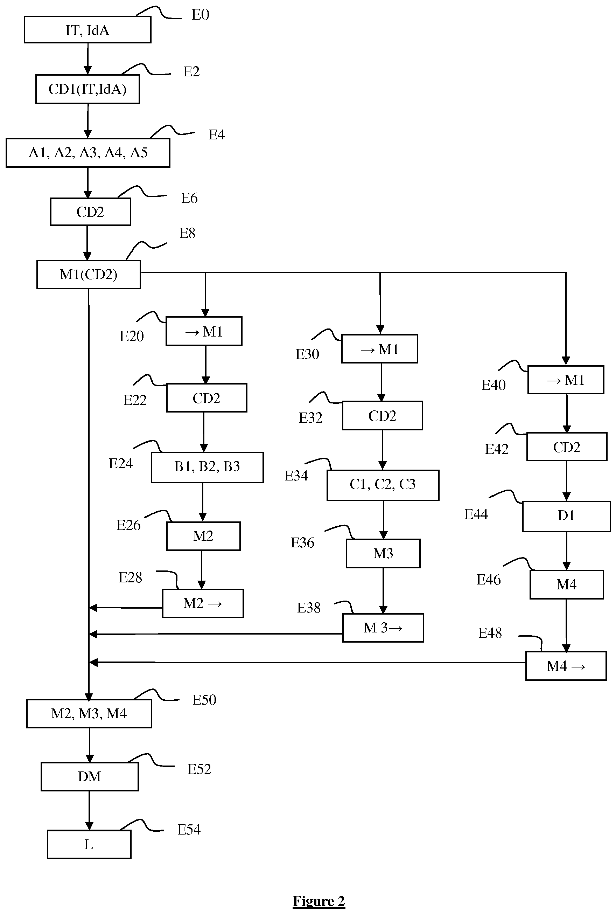

Un mode de réalisation d'un procédé d'obtention de données et d'un procédé de traitement de données va maintenant être décrit en référence aux figures 1 et 2.

La **figure 1** représente un système SYS comprenant un réseau de communication R.

Le système SYS comprend également un premier terminal TA et un deuxième terminal TB aptes à communiquer via le réseau de communication R.

Le réseau R comprend une pluralité de sous réseaux, par exemple les sous réseaux R1, R2, R3, R4 et R5.

Le sous réseau R1 est par exemple un réseau de type VoIP (pour « Voix sur IP »). Le sous réseau R2 est par exemple un réseau d'accès et de collecte. Le sous réseau R3 est par exemple un réseau coeur. Le sous réseau R4 est par exemple un réseau d'un opérateur tiers. Le sous réseau R5 est par exemple un réseau de type RTC (pour « Réseau Téléphonique Commuté »).

Des dispositifs de traitement S1, S2, S3, S4 et S5 sont installés respectivement au niveau de chaque sous réseau R1, R2, R3, R4 et R5.

Les dispositifs de traitement S1, S2, S3, S4 et S5 sont respectivement des équipements du sous réseaux R1, R2, R3, R4 et R5 du réseau R. Chaque dispositif de traitement est par exemple un ordinateur de type PC.

A titre d'alternative, certains sous réseaux du réseau R ne disposent pas d'un dispositif de traitement.

Les terminaux TA et TB sont aptes à communiquer avec un ou plusieurs autres terminaux via le réseau de communication R.

Un terminal est un équipement de communication. Un terminal est par exemple un terminal téléphonique, par exemple un téléphone, un fax, un serveur, un téléphone raccordé à un autocommutateur téléphonique privé ou PABX (pour « Private Automatic Branch eXchange » en anglais) ...

Chaque dispositif de traitement S1, S2, S3, S4 et S5 est apte à capturer, c'est-à-dire intercepter sans en modifier le cheminement, les paquets de données émis et/ou reçus par le sous réseau dans lequel est installé le dispositif de traitement considéré.

Les paquets de données capturés comprennent des paquets de données de signalisation et/ou des paquets de contenu.

Ces paquets de données sont éventuellement filtrés en fonction de premiers critères de sélection prédéfinis. Ce filtrage permet de sélectionner des paquets de données parmi les paquets de données capturés.

Par exemple, les paquets de données relatifs à un ou plusieurs protocoles donnés sont sélectionnés et les paquets relatifs à d'autres protocoles sont ignorés. Par exemple les paquets de type VoIP sont sélectionnés et les paquets de données de transferts de fichiers transmis selon le protocole FTP (pour « File Transfer Protocol «) et les paquets de données transmis selon le protocole web http (pour « HyperText Transfer Protocol ») sont ignorés.

A titre d'alternative, aucun filtrage n'est effectué.

Puis, un ensemble de données est obtenu pour chaque paquet de données sélectionné.

L'ensemble de données obtenu pour un paquet de données considéré comprend tout ou partie des données contenues dans le paquet de données considéré.

Les ensembles de données sont par exemple déterminés en fonction de deuxièmes critères prédéterminés.

Par exemple, chaque ensemble de données comprend des données contenues dans les champs «from» et «to» du paquet de données considéré.

Chaque ensemble de données est enregistré dans une zone de stockage, par exemple une base de données BD accessible par le dispositif de traitement en association avec une date, par exemple une date de capture du paquet de données par le dispositif de traitement ou une date d'arrivée du paquet de données au niveau du sous réseau. La date d'arrivée est par exemple exprimée sous la forme « jour - mois - année - heure - minute - seconde ».

La zone de stockage BD est par exemple de type FIFO (pour « First Input First Output »). La zone de stockage BD contient ainsi une pluralité de paquets correspondant aux paquets émis et/ou reçus pendant un intervalle de temps, par exemple égal à un mois ou une semaine.

Le dispositif de traitement S1 dispose ainsi d'une zone de stockage BD1 dans laquelle sont enregistrés des ensembles de données datés déterminés à partir de paquets émis ou reçus par le sous réseau R1.

De même, chaque dispositif de traitement S2, S3, S4, S5 dispose respectivement d'une zone de stockage BD2, BD3, BD4, BD5 dans laquelle est enregistrée respectivement des ensembles de données datés déterminés à partir de paquets de données émis ou reçus par le sous réseau associé.

Un mode de réalisation d'un procédé d'obtention et d'un procédé de traitement va maintenant être décrit en référence à la **figure 2**.

Dans ce mode de réalisation, le procédé d'obtention est mis en oeuvre par le dispositif de traitement S1 du sous réseau R1 et un procédé de traitement est mis en oeuvre respectivement par les dispositifs de traitement R2, R3 et R4 des sous réseaux respectifs R2, R3 et R4 du réseau R.

Au sens de l'invention, le dispositif de traitement S1 représente une entité de premier sous réseau et les dispositifs de traitement S2, S3 et S4 représentent respectivement des entités de deuxième sous réseau.

Lors d'une première étape préalable E0, un opérateur du sous réseau R1, saisit via une interface graphique affichée sur un écran de visualisation du dispositif de traitement S1 et au moyen d'une interface utilisateur, par exemple une souris d'ordinateur et un clavier du dispositif de traitement S1, une information temporelle IT et un identifiant IdA du terminal TA.

Le dispositif de traitement S1 obtient ainsi au moins une information temporelle et au moins un identifiant de terminal relatifs à au moins une communication.

L'information temporelle IT définit un intervalle temporel IV.

L'information temporelle IT est par exemple une date exprimée sous la forme «jour-mois-année » par exemple le 12 avril 2014 et l'intervalle temporel IV est par exemple un intervalle commençant le 12 avril 2014 à 0h00mn et se terminant à 0h59mn 59s.

A titre d'alternative, l'intervalle temporel IV est défini par une date de début et une date de fin.

L'identifiant du terminal TA est par exemple un adresse IP (pour « Internet Protocol ») du terminal TA.

L'étape E0 est par exemple réalisée suite à une plainte d'un utilisateur du terminal TA indiquant un échec lors d'une tentative d'envoi d'un fax.

Lors d'une étape E2, le dispositif de traitement S1 construit une première requête CD1 contenant l'information temporelle IT et l'identifiant de terminal TA.

Lors d'une étape E4, le dispositif de traitement S1 accède à la zone de stockage BD1 du dispositif de traitement S1 et sélectionne parmi les ensembles de données enregistrés dans la zone de stockage BD1, un ou plusieurs ensembles de données datées en fonction des paramètres de recherche contenus dans la première requête CD1, c'est-à-dire en fonction de l'information temporelle IT et de l'identifiant de terminal IdA.

Les ensembles de données datés sélectionnés sont ainsi obtenus pat le dispositif de traitement S1.

Chaque ensemble de données sélectionné contient tout ou partie des données relatives à un paquet de données stockées dans la zone de stockage BD1.

A titre d'alternative, un ensemble de données comprend également des données calculées à partir des données extraites du paquet de données.

Une telle valeur calculée est par exemple le nombre de caractères d'un champ du paquet de données, par exemple le nombre de caractère du champ intitulé « call-Id ».

Une donnée calculée est calculée par le dispositif de traitement S1 avant enregistrement des données dans la zone de stockage ou après sélection des données dans la zone de stockage.

Par exemple, cinq ensembles de données A1, A2, A3, A4 et A5 sont obtenus.

Les ensembles de données A1, A2 et A3 sont par exemple relatifs à une première communication entre le terminal TA et la terminal TB. Les ensembles A4 et A5 sont par exemple relatifs à une deuxième communication entre le terminal TA et un terminal TC (non représenté).

Lors d'une étape E6, le dispositif de traitement S1 construit une deuxième requête CD2.

La deuxième requête CD2 contient l'information temporelle IT et l'identifiant IdA de terminal TA.

Elle comprend également un ou plusieurs paramètres supplémentaires par rapport à la première requête CD1, par exemple un identifiant IdB du terminal TB.

Le ou les paramètres supplémentaires sont par exemple saisis par l'opérateur au moyen d'une interface utilisateur après affichage des ensembles de données obtenus lors de l'étape E4 sur un écran de visualisation du dispositif de traitement S1.

A titre d'alternative, la deuxième requête CD2 ne comprend pas de paramètre supplémentaire et la deuxième requête CD2 est la première requête CD1.

Lors d'une étape E8, un message M1 contenant la deuxième requête CD2 est transmis à chacun des dispositifs de traitement S2, S3 et S4.

Les dispositifs de traitement auxquels est envoyé le message M1 sont par exemple choisis parmi la pluralité de dispositifs S2, S3, S4 et S5 du système SYS par un opérateur du dispositif de traitement S1.

Les dispositifs de traitement auxquels est envoyé le message M1 sont par exemple choisis au moyen d'une interface utilisateur.

A titre d'alternative, le message M1 est envoyé à tous les dispositifs de traitement du réseau R.

Le message M1 est par exemple transmis via un réseau de communication autre que le réseau de communication R, par exemple un deuxième réseau de communication RM.

Le message M1 est par exemple transmis via un service de messagerie, par exemple sous la forme d'un SMS (pour « Short Message Service »), d'un message d'une messagerie instantanée (« Instant Message » en anglais), d'un message électronique de type mail...

La deuxième requête CD2 est transmise de façon sécurisée. Elle est notamment signée par une clé secrète du dispositif de traitement S1.

Elle est éventuellement chiffrée, compactée et/ou encodée. L'encodage permet notamment d'éliminer certains caractères non adaptés au service de messagerie utilisé. Le compactage de la requête CD2 permet de réduire la taille du message M1.

La deuxième requête CD2 est par exemple transmise sous la forme d'une chaine de caractères au format ISO/646 (« organisation internationale de normalisation » ou au format ASCII (pour « American Standard Code for Information Interchange»), code américain normalisé pour l'échange d'information.

Le message M1 est reçu par le dispositif de traitement S2 lors d'une étape E20.

Dans le mode de réalisation décrit, le message M1 est reçu par un module de réception du dispositif de traitement S2.

A titre d'alternative, le message M1 est transmis au module de réception du dispositif de traitement S2 suite à une action de l'opérateur du dispositif de traitement S2, par exemple un copier/coller du texte reçu dans un mail.

Lors d'une étape E22, le deuxième dispositif de traitement S2 vérifie que le message M1 reçu a été signé par une personne autorisée. Il décompacte le message M1 et le déchiffre.

Il obtient ainsi la deuxième requête CD2.

Les clés utilisées pour d'une part signer ou vérifier une signature et d'autre part pour chiffrer ou déchiffrer sont des clés de systèmes de clés partagés entre le premier dispositif S1 et le deuxième dispositif S2.

Le processus de signature et le processus de chiffrement/déchiffrement utilisés sont des systèmes connus de l'état de l'art et de ce fait ne sont pas décrits ici.

Dans le cas où la requête CD2 du message M1 a été signée par une personne non autorisée, le processus s'arrête.

Lors d'une étape E24, le dispositif de traitement S2 accède à la zone de stockage BD2 du dispositif de traitement S2 et sélectionne parmi les ensembles de données enregistrés dans la zone de stockage BD2, un ou plusieurs ensembles de données datées en fonction des paramètres de recherche contenus dans la deuxième requête CD2, c'est-à-dire notamment en fonction de l'information temporelle IT et de l'identifiant de terminal IdA.

Chaque ensemble de données sélectionné contient tout ou partie des données relatives à un paquet de données stockées dans la zone de stockage BD2.

A titre d'alternative, un ensemble de données comprend également des données calculées par le deuxième dispositif de traitement S2 à partir des données extraites du paquet de données.

L'étape E24 est similaire à l'étape E4 décrite précédemment.

Par exemple, trois ensembles de données B1, B2 et B3 sont sélectionnés.

Lors d'une étape E26, le deuxième dispositif de traitement S2 construit un message M2 contenant les ensembles de données B1, B2 et B3.

Le message M2 est un message chiffré par une clé de chiffrement pour préserver la confidentialité des données. Il est également signé. Il peut également être encodé et compacté.

Le message M2 représente une réponse à la requête CD2.

Lors d'une étape E28, le dispositif de traitement S2 transmet le message M2 au dispositif de traitement S1.

Le message M2 est par exemple transmis via un réseau de communication autre que le réseau de communication R. Il est par exemple transmis via le deuxième réseau de communication RM ou via un autre réseau de communication.

Le message M2 est par exemple transmis via un service de messagerie.

Le service de messagerie utilisé pour transmettre le message M2 est le même service de messagerie que celui utilisé par le dispositif de traitement S1 pour transmettre le message M1.

A titre d'alternative, un service de messagerie différent de celui utilisé pour transmettre le message M1 est utilisé pour transmettre le message M2.

Lors d'étapes E30 à E38, similaires aux étapes E20 à E28, le dispositif de traitement S3 reçoit le message M1 contenant la deuxième requête CD2, détermine une réponse à la requête CD2, par accès à la zone de stockage BD3, et transmet au dispositif de traitement S1, un message M3 contenant la réponse déterminée. Le message M3 contient par exemple des ensembles de données C1, C2 et C3.

Lors d'étapes E40 à E48, similaires aux étapes E20 à E28, le dispositif de traitement S4 reçoit le message M1 contenant la deuxième requête CD2, détermine une réponse à la requête CD2, par accès à la zone de stockage BD4, et transmet au dispositif de traitement S1, un message M4 contenant la réponse déterminée. Le message M4 contient par exemple un ensemble de données D1.

Les messages M2, M3 et M4 sont reçus par le dispositif de traitement S1 lors d'une étape E50.

Le dispositif de traitement S1 obtient ainsi des ensembles de données B1, B2, B3 en provenance du dispositif de traitement S2, des ensembles de données C1, C2, C3 en provenance du dispositif de traitement S3 et un ensemble de données D1 en provenance du dispositif de traitement S4.

Lors d'une étape E52, le dispositif de traitement S1 détermine une date modifiée DM pour chaque ensemble de données obtenu, dans le repère temporel du sous réseau R1.

En effet, même si les horloges de sous réseaux sont synchronisées entres elles, par exemple par un protocole standardisé NTP (pour « Network Time Protocol »), un décalage d'horloge est souvent observé. De plus, des dispositifs de traitements différents peuvent se trouver dans des fuseaux horaires différents.

Le protocole NTP est par exemple décrit dans le document RFC (pour « Request For Comments ») 1305 de l'IETF (pour « Internet Engineering Task Force »).

La date modifiée d'un ensemble de données obtenu par le deuxième dispositif de traitement S2 est obtenue en ajoutant une valeur d'écart EC2 à la date initialement associée à cet ensemble de données reçu du dispositif de traitement S2. La valeur d'écart EC2 est une valeur prédéterminée.

La date modifiée d'un ensemble de données obtenu par le troisième dispositif de traitement S3 est obtenue en ajoutant une valeur d'écart EC3 à la date initialement associée à cet ensemble de données. La valeur d'écart EC3 est une valeur prédéterminée.

La date modifiée d'un ensemble de données obtenu par le quatrième dispositif de traitement S4 est obtenue en ajoutant une valeur d'écart EC4 à la date initialement associée à cet ensemble de données. La valeur d'écart EC4 est une valeur prédéterminée.

Les valeurs d'écart EC2, EC3, EC4 représentent respectivement des informations de décalage au sens de l'invention.

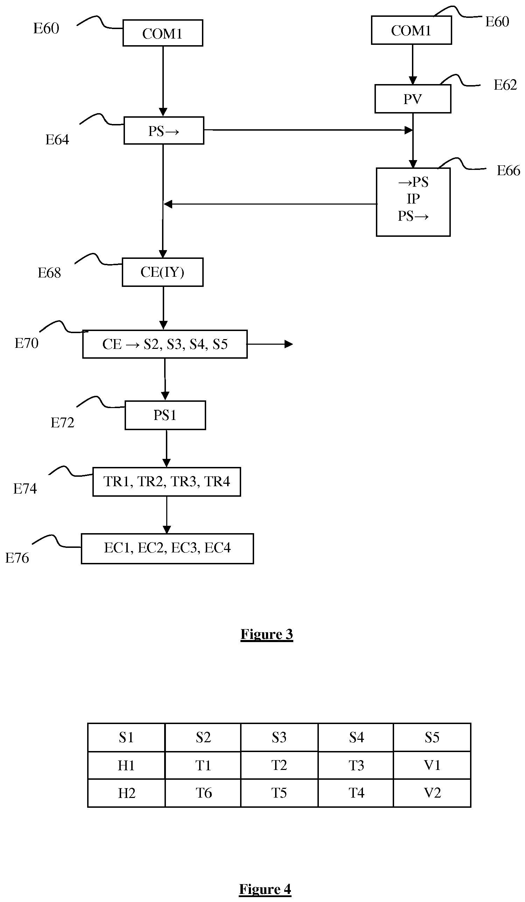

Un mode de réalisation de la détermination des valeurs d'écart est donné, à titre d'exemple, dans la suite de la description, en référence à la figure 3.

L'étape E52 est suivie d'une étape E54 lors de laquelle le dispositif de traitement S1 ordonne les ensembles de données en fonction des dates modifiées.

Suite à l'étape E54, on obtient une liste ordonnée L des ensembles de données.

Par exemple, la liste ordonnée L est A1, B1, C1, D1, A2, B2, C2, A3, B3, C3.

La liste L est par exemple affichée sur un écran de visualisation du dispositif de traitement S1. Un opérateur peut analyser la liste affichée et observer que le dispositif de traitement S4 est probablement à l'origine du problème.

Dans le mode de réalisation décrit, les messages transmis entre les différents dispositifs utilisent le même service de messagerie. En variante, des services de messagerie différents peuvent être utilisés. Par exemple, les dispositifs de traitement S1 et S2 communiquent via un service de messagerie instantanée et les dispositifs de traitement S1 et S3 communiquent via un service de messagerie de type SMS.

Les étapes E0, E2, E4, E6, E8, E50, E52 et E54 représentent les étapes du procédé d'obtention mises en oeuvre par exemple par le dispositif de traitement S1.

Les étapes E20, E22, E24, E26 et E28 représentent les étapes du procédé de traitement mises en oeuvre par exemple par le dispositif de traitement S2.

Les étapes E30, E32, E34, E36 et E38 représentent les étapes du procédé de traitement mises en oeuvre par exemple par le dispositif de traitement S3.

Les étapes E40, E42, E44, E46 et E48 représentent les étapes du procédé de traitement mises en oeuvre par exemple par le dispositif de traitement S4.

Un mode de réalisation de détermination de valeurs d'écart dans le réseau R va maintenant être décrit en référence à la **figure 3**.

Lors d'une étape E60, le dispositif de traitement S1 initie et établit une communication COM1 avec un autre dispositif de traitement du réseau R, par exemple le dispositif de traitement S4. L'établissement d'une communication est un processus connu et ne sera pas détaillé ici.

Lors de l'établissement de cette communication, le dispositif de traitement S1 impose que les paquets de données échangés traversent tous les sous réseaux du réseau R.

Ainsi, il impose par exemple qu'un ou plusieurs paquets de données émis par le dispositif de traitement S1 passent par le sous réseau R2, puis par le sous réseau R3, puis par le sous réseau R5 avant d'atteindre le sous réseau R4.

Suite à l'établissement de la communication COM1, lors d'une étape E62, le dispositif de traitement S1 envoie un ou plusieurs paquets de données PS contenant un signal prédéfini en direction du dispositif de traitement S4.

Le signal prédéfini est par exemple un signal de type « rampe ».

Les paquets émis par le dispositif de traitement S1 sont reçus par les différents sous réseaux puis par le dispositif de traitement S4.

Des ensembles de données relatifs aux paquets de données reçus par les dispositifs de traitement sont respectivement enregistrés dans les zones de stockage associées à ces dispositifs de traitement.

Egalement, suite à l'établissement de la communication COM1, lors d'une étape E64, le dispositif de traitement S4 envoie des paquets de données vides PV, c'est-à-dire des paquets ne contenant aucun signal.

Le dispositif de traitement S4 envoie des paquets de données PV jusqu'à ce qu'il reçoive les paquets PS émis par le dispositif de traitement S1.

Lors d'une étape E66, le dispositif de traitement S4 ayant reçu le premier paquet de données PS attend pendant un intervalle de temps IP prédéfini, par exemple 200ms (pour « millisecondes »), compté à partir du début de réception du premier paquet PS. Puis le dispositif de traitement S4 renvoie les paquets PS reçus, au dispositif de traitement S1 via le même chemin.

Lors d'une étape E68, le dispositif de traitement S1 ayant reçu les paquets de données transmis par le dispositif de traitement S4, c'est-à-dire les paquets PV puis les paquets PS génère une requête CE contenant en paramètre un information temporelle TE définissant un intervalle temporel IY contenant la date d'émission des paquets et un identifiant du dispositif de traitement S1. L'intervalle temporel IY inclut la date d'émission des paquets PS par le dispositif de traitement S1 et la date de réception de ces paquets.

Le dispositif de traitement S1 transmet la requête CE à la zone de stockage BD1 et reçoit en retour un ensemble de données pour chaque paquet PS transmis.

Lors d'une étape E70, le dispositif de traitement S1 transmet la requête CE à chaque autre dispositif de traitement du réseau R.

Il reçoit en retour en provenance des différents dispositifs de traitement des ensembles de données datées relatifs aux paquets de données PV et PS.

Lors d'une étape E72, le dispositif de traitement S1 identifie parmi tous les ensembles de données reçues les ensembles de données correspondant aux paquets PS.

En effet, le signal transmis dans les paquets de données PS étant prédéterminé, il est facile d'identifier les ensembles de données relatifs à ces paquets.

Il est supposé que le premier paquet PS émis, par exemple un paquet PS1, est émis à la date H1 et reçu par le dispositif de traitement S1 à la date H2. Les dates H1 et H2 sont des dates du référentiel temporel du dispositif S1.

Le premier paquet PS1 est reçu par le dispositif de traitement S2 à la date T1, puis à la date T6. Les dates T1 et T6 sont des dates du référentiel temporel du dispositif S2.

Le premier paquet PS1 est reçu par le dispositif de traitement S3 à la date T2, puis à la date T5. Les dates T2 et T5 sont des dates du référentiel temporel du dispositif S3.

Le premier paquet PS1 est reçu par le dispositif de traitement S5 à la date T3, puis à la date T4. Les dates T1 et T4 sont des dates du référentiel temporel du dispositif S4.

Le premier paquet PS1 est reçu à la date V1 et réémis par le dispositif de traitement S4 à la date V2. Les dates V1 et V2 sont des dates du référentiel temporel du dispositif S4.

Le temps de transport d'un paquet entre le dispositif de traitement S1 et le dispositif de traitement S2 est une valeur TR1.

Le temps de transport d'un paquet entre le dispositif de traitement S2 et le dispositif de traitement S3 est une valeur TR2.

Le temps de transport d'un paquet entre le dispositif de traitement S3 et le dispositif de traitement S5 est une valeur TR3.

Le temps de transport d'un paquet entre le dispositif de traitement S5 et le dispositif de traitement S4 est une valeur TR4.

La figure 4 est un tableau illustrant un exemple de temps de réception du premier paquet PS1 par les différents dispositifs de traitement selon un exemple.

L'étape E72 est suivie d'une étape E74 lors de laquelle le dispositif de traitement S1 détermine les valeurs de temps de transport TR1, TR2, TR3 et TR4.

L'écart temporel entre les dates T4 et T3 est défini par l'équation

$$F1 : T4\text{-}T3 = 2 * TR4 + IP.$$

L'écart temporel entre les dates T5 et T2 est défini par la l'équation

$$F2 : T5\text{-}T2 = 2* TR3 + 2 * TR4 + IP.$$

L'écart temporel entre les dates T6 et T1 est défini par l'équation

$$F3 : T5\text{-}T2 = 2 * TR2 + 2* TR3 + 2 * TR4 + IP.$$

L'écart temporel entre les dates H2 et H1 est défini par l'équation

$$F4 : H2\text{-}H1 = 2 * TR2 + 2* TR3 + 2 * TR4 + IP.$$

La résolution des équation F1, F2, F3 et F4 permet d'obtenir les valeurs de temps de transport TR1, TR2, TR3 et TR4.

Puis, lors d'une étape E76, le dispositif de traitement S1 calcule les valeurs d'écart EC1, EC2, EC3 et EC4.

L'écart EC1 est défini par la formule F5 : EC1 = (H1+TR1) - T1

L'écart EC2 est défini par la formule F5 : EC2 = (H1+TR1+TR2) - T2

L'écart EC3 est défini par la formule F5 : EC3 = (H1+TR1+TR2+TR4) - T3

L'écart EC4 est défini par la formule F5 : EC4 = (H1+TR1+TR2+TR4 + IP) - V1.

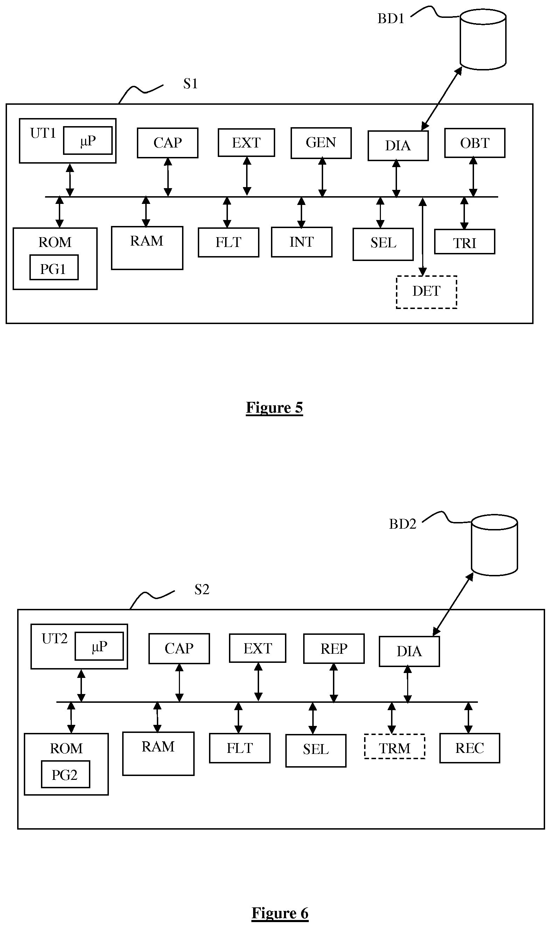

Selon un mode de réalisation choisi et représenté à la **figure 5**, un dispositif de traitement mettant en oeuvre un procédé d'obtention selon l'invention est par exemple un ordinateur S1 qui comporte de façon connue, notamment une unité de traitement UT1 équipée d'un microprocesseur, une mémoire morte de type ROM ou EEPROM, une mémoire vive de type RAM.

Le dispositif de traitement S1 comporte de façon connue, notamment une unité de traitement UT1 équipée d'un microprocesseur, une mémoire morte de type ROM ou EEPROM, une mémoire vive de type RAM. Le dispositif de traitement S1 peut comporter de manière classique et non exhaustive les éléments suivants: un microphone, un haut-parleur, un lecteur de disque, un clavier, un écran de visualisation, un module d'affichage pour l'affichage sur l'écran de visualisation, un moyen de stockage...

La mémoire morte comporte des registres mémorisant un programme d'ordinateur PG1 comportant des instructions de programme adaptées à mettre en oeuvre un procédé d'obtention selon un mode de réalisation de l'invention décrit précédemment.

Le dispositif de traitement S1 est par exemple une entité d'un premier sous réseau d'un réseau de communication R, par exemple un sous réseau R1.

Le dispositif de traitement S1 comporte également un module de capture CAP, un module de filtrage FLT, un module d'extraction EXT, un module d'interface INT, un module de génération de requête GEN, un module de dialogue DIA avec une zone de stockage BD1, un module de sélection SEL, un module d'obtention OBT et un module de classement TRI.

Le module de capture CAP est apte à capturer, c'est-à-dire à intercepter des paquets de données contenus dans les flux émis et/ou reçus par le sous réseau R1. L'interception est ici réalisée sans perturber les communications. En d'autres termes, tout flux émis par un premier équipement de communication à destination d'un deuxième équipement arrivant au niveau du sous réseau R1 est d'une part intercepté par le module de capture CAP et d'autre part reçu par le deuxième équipement de la même façon que s'il n'était pas intercepté.

L'interception est transparente pour les utilisateurs des équipements.

Un flux émis par un équipement contient une succession de paquets de données.

Le module de capture CAP obtient en conséquence une pluralité de paquets de données en provenance d'une pluralité d'équipements, directement, via un autre sous réseau du réseau R ou encore via un autre réseau de communication. Un autre réseau est par exemple un réseau local.

Les paquets de données obtenus comprennent des paquets de données de différents types, par exemple des paquets de données de type SIP (pour « Session Initiation Protocol ») et des paquets de données de type RTC (pour « Réseau Téléphonique Commuté »).

Le module de filtrage FLT est apte à filtrer les paquets obtenus par le module de capture CAP en fonction de critères de sélection prédéterminés.

Par exemple, le module de filtrage FLT est configuré pour obtenir les paquets de données de type SIP parmi les paquets de données obtenus par le module de capture CAP et pour rejeter les paquets de type H323.

Cette opération de filtrage consiste à extraire tous les paquets ou certains paquets de données obtenus par le module de capture CAP, à transmettre les paquets extraits au module d'extraction EXT et/ou à les enregistrer dans une mémoire du dispositif de traitement S1.

Le module d'extraction de données EXT est apte à obtenir des ensembles de données contenant des données extraites des paquets de données obtenus suite à l'opération de filtrage, en fonction de deuxièmes critères de sélection prédéfinis.

Par exemple, dans le cas où les paquets de données extraits correspondent à des messages de signalisation SIP, les données correspondant aux champs « type de séquence », « from », « to », « call-id » sont extraites et enregistrées dans une mémoire du dispositif de traitement en association avec une date d'arrivée du paquet de données.

Les ensembles de données obtenus sont par exemple enregistrés dans la zone de stockage BD1.

Le module d'interface INT est apte à obtenir au moins une information temporelle définissant au moins un intervalle temporel et d'au moins un identifiant de terminal pour au moins une communication.

Le module de génération GEN est apte à générer une requête comportant ladite au moins une information temporelle et ledit au moins un identifiant de terminal

Le module d'obtention OBT est apte à obtenir au moins une réponse à la requête ; la réponse obtenue comporte au moins un ensemble de données datées relatif à au moins un paquet de données, ledit au moins un ensemble étant sélectionné par une deuxième entité d'au moins un deuxième sous réseau du réseau R, parmi une pluralité d'ensembles de données relatifs à des paquets de données reçus par au moins une entité dudit au moins un deuxième sous réseau du réseau R, en fonction de ladite d'au moins une information temporelle et dudit au moins un identifiant de terminal.

Le module de dialogue DIA est adapté pour accéder à la zone de stockage BD1.

Le module de sélection SEL est apte à sélectionner parmi une pluralité d'ensembles de données relatifs à des paquets de données reçus par une entité du sous réseau R1, au moins un ensemble de données datées en fonction de ladite au moins une information temporelle et dudit au moins un identifiant de terminal.

Le module de classement TRI est apte à classer des ensembles de données obtenues par le dispositif de traitement S1, en fonction d'une date associée à chaque ensemble.

Le dispositif de traitement S1 peut également comporter un module de détermination DET apte à déterminer une information de décalage d'horloge avec au moins un autre entité d'au moins un autre sous réseau de réseau R.

De manière plus générale un moyen de stockage, lisible par un ordinateur ou par un microprocesseur, intégré ou non au dispositif, éventuellement amovible, mémorise un programme mettant en oeuvre les étapes d'un procédé d'obtention, selon l'invention.

Selon un mode de réalisation choisi et représenté à la **figure 6**, un dispositif de traitement mettant en oeuvre un procédé de traitement selon l'invention est par exemple un ordinateur S2 qui comporte de façon connue, notamment une unité de traitement UT2 équipée d'un microprocesseur, une mémoire morte de type ROM ou EEPROM, une mémoire vive de type RAM.

Le dispositif de traitement S2 peut comporter de manière classique et non exhaustive les éléments suivants: un microphone, un haut-parleur, un lecteur de disque, un clavier, un écran de visualisation, un module d'affichage pour l'affichage sur l'écran de visualisation, un moyen de stockage...

La mémoire morte comporte des registres mémorisant un programme d'ordinateur PG2 comportant des instructions de programme adaptées à mettre en oeuvre un procédé de traitement selon un mode de réalisation de l'invention décrit précédemment

Le dispositif de traitement S1 est par exemple une entité d'un deuxième sous réseau d'un réseau de communication R, par exemple un sous réseau R2.

Le dispositif de traitement S2 comporte également un module de capture CAP, un module de filtrage FLT, un module d'extraction EXT, un module de réception de requête REC, un module de dialogue DIA avec une base de données BD2, un module de détermination de réponse REP et un module de sélection SEL.

Le module de capture CAP, le module de filtrage FLT et le module d'extraction EXT sont similaires à ceux décrit précédemment en référence à la figure 5

Le module de réception de requête REC est apte à obtenir une requête comportant au moins une information temporelle définissant au moins un intervalle temporel et au moins un identifiant de terminal pour au moins une communication.

Le module de sélection SEL est apte à sélectionner parmi une pluralité d'ensembles de données relatifs à des paquets de données reçus par au moins une entité du deuxième sous réseau R2, au moins un ensemble de données datées, en fonction de ladite au moins une information temporelle et dudit au moins un identifiant de terminal ;

Le module de détermination de réponse REP est apte à déterminer une réponse à la requête obtenue, la réponse comportant ledit au moins un ensemble de données sélectionné.

Le dispositif de traitement S2 peut également comporter un module TRM de transmission de la réponse déterminée via un réseau de communication autre que le réseau R, par exemple via un service de messagerie.

De manière plus générale un moyen de stockage, lisible par un ordinateur ou par un microprocesseur, intégré ou non au dispositif, éventuellement amovible, mémorise un programme mettant en oeuvre les étapes d'un procédé de traitement, selon l'invention.

**Revendications**

1. Procédé d'obtention de données relatives à des paquets de données échangés au cours d'au moins une communication dans un réseau (R) comportant une pluralité de sous réseaux (R1, R2...),
**caractérisé en ce qu'**il comporte les étapes suivantes, mises en oeuvre par une première entité (S1) d'un premier sous réseau (R1) dudit réseau (R) :

obtention (E0) au moyen d'une interface utilisateur, d'au moins une information temporelle (IT) définissant au moins un intervalle temporel et d'au moins un identifiant de terminal (IdA) pour ladite au moins une communication ;
transmission (E8) d'une requête (CD2) comportant ladite au moins une information temporelle (IT) et ledit au moins un identifiant de terminal (IdA), à au moins une deuxième entité (S2) d'au moins un deuxième sous réseau (R2) dudit réseau (R) ;
réception (E50) d'au moins une réponse (M2, M3, M4) à ladite requête (CD2), comportant au moins un ensemble de données datées (B1, B2, B3) relatif à au moins un paquet de données, ledit au moins un ensemble étant sélectionné par une deuxième entité (S2) dudit au moins un deuxième sous réseau (R2) parmi une pluralité d'ensembles de données relatifs à des paquets de données transitant dans ledit au moins un deuxième sous réseau, en fonction de ladite au moins une information temporelle et dudit au moins un identifiant de terminal.

2. Procédé d'obtention selon la revendication 1 dans lequel la requête (CD2) est transmise à ladite au moins une deuxième entité (S2) dudit au moins un deuxième sous réseau (R2) via un deuxième réseau de communication (RM).

3. Procédé d'obtention selon l'une des revendications précédentes **caractérisé en ce qu'**il comporte une étape d'obtention (E4) d'au moins un deuxième ensemble de données datées (A1, A2, A3, A4, A5) extraites d'au moins un paquet de données, ledit au moins un paquet étant sélectionné par ladite première entité (S1) du premier sous réseau (R1) parmi une pluralité de paquets de données reçus par au moins une entité dudit premier réseau (R1), en fonction de ladite d'au moins une information temporelle et dudit au moins un identifiant de terminal et une étape de classement (E54) des ensembles obtenus en fonction d'une date associée à chaque ensemble.

4. Procédé d'obtention selon la revendication 3 dans lequel au moins une date d'au moins un ensemble est modifiée en fonction d'une information de décalage (EC2) prédéterminée.

5. Procédé selon la revendication 4 dans lequel la détermination de ladite information de décalage (EC2) comprend une transmission (E64) à une entité d'un dit sous réseau d'un signal donné et une réception (E66) dudit signal en provenance de ladite entité.

6. Procédé d'obtention selon la revendication 5 dans lequel lors de la transmission et de la réception dudit signal, ledit signal donné transite via au moins un sous réseau intermédiaire.

7. Procédé de traitement de données relatives à des paquets de données échangés au cours d'au moins une communication dans un réseau (R) comportant une pluralité de sous réseaux (R1, R2, R3,...),
**caractérisé en ce qu'**il comporte les étapes suivantes, mises en oeuvre par une entité (S2) d'un deuxième sous réseau (R2) dudit réseau (R) :

réception (E20) d'une requête (CD2) transmise par une entité (S1) d'un premier sous réseau (R1) du réseau (R), ladite requête comportant au moins une information temporelle (IT) définissant au moins un intervalle temporel et au moins un identifiant de terminal (IdA) pour ladite au moins une communication ;
sélection (E24) parmi une pluralité d'ensembles de données relatifs à des paquets de données reçus par au moins une entité dudit deuxième sous réseau (R2), d'au moins un ensemble de données datées (B1, B2, B3), en fonction de ladite au moins une information temporelle et dudit au moins un identifiant de terminal ;
transmission (E28) à destination d'une entité du premier sous réseau, d'une réponse (M2) à la requête comportant ledit au moins un ensemble de données sélectionné.

8. Entité (S1) d'un premier sous réseau (R1) d'un réseau de communication (R) **caractérisée en ce qu'**elle comporte :

une interface utilisateur (INT) configurée pour obtenir au moins une information temporelle (IT) définissant au moins un intervalle temporel et au moins un identifiant de terminal (IdA) pour ladite au moins une communication ;
un module de transmission à au moins une deuxième entité (S2) d'au moins un deuxième sous réseau (R2) dudit réseau (R), d'une requête (CD2) comportant ladite au moins une information temporelle et ledit au moins un identifiant de terminal ; et
un module d'obtention (OBT) configuré pour recevoir au moins une réponse (M2) à ladite requête, comportant au moins un ensemble de données datées (B1, B2, B3) relatif à au moins un paquet de données, ledit au moins un ensemble étant sélectionné par une deuxième entité (S2) dudit au moins un deuxième sous réseau (R2) parmi une pluralité d'ensembles de données relatifs à des paquets de données transitant par ledit au moins un deuxième sous réseau, en fonction de ladite au moins une information temporelle et dudit au moins un identifiant de terminal.

9. Entité (S2) d'un deuxième sous réseau (R2) d'un réseau de communication **caractérisée en ce qu'**elle comporte :

un module de réception (REC) d'une requête (CD2) transmise par une entité d'un premier sous réseau du réseau (R), ladite requête comportant au moins une information temporelle (IT) définissant au moins un intervalle temporel et au moins un identifiant de terminal (IdA) pour ladite au moins une communication ;
un module de sélection (SEL) parmi une pluralité d'ensembles de données relatifs à des paquets de données reçus par au moins une entité dudit deuxième sous réseau (R2), d'au moins un ensemble de données datées (B1, B2, B3), en fonction de ladite au moins une information temporelle et dudit au moins un identifiant de terminal ; et
un module de transmission, à destination d'une entité du premier sous réseau, d'une réponse (M2) à la requête comportant ledit au moins un ensemble de données sélectionné.

10. Produit programme d'ordinateur (PG1) comprenant des instructions pour mettre en oeuvre les étapes d'un procédé d'obtention selon l'une des revendications 1 à 6, lorsqu'il est chargé et exécuté par un processeur.

11. Produit programme d'ordinateur (PG2) comprenant des instructions pour mettre en oeuvre les étapes d'un procédé de traitement selon la revendication 7, lorsqu'il est chargé et exécuté par un processeur.


**Patentansprüche**

1. Verfahren zum Erhalten von Daten zu Datenpaketen, die während mindestens einer Kommunikation in einem Netz (R), das eine Vielzahl von Teilnetzen (R1, R2 usw.) umfasst, ausgetauscht werden,
**dadurch gekennzeichnet, dass** es die folgenden Schritte umfasst, die von einer ersten Entität (S1) eines ersten Teilnetzes (R1) des Netzes (R) ausgeführt werden:

Erhalten (E0) mindestens einer Zeitinformation (IT), die mindestens ein Zeitintervall definiert, und mindestens einer Endgerätekennung (IdA) für die mindestens eine Kommunikation mittels einer Benutzeroberfläche;
Senden (E8) einer Anfrage (CD2), welche die mindestens eine Zeitinformation (IT) und die mindestens eine Endgerätekennung (IdA) umfasst, an mindestens eine zweite Entität (S2) mindestens eines zweiten Teilnetzes (R2) des Netzes (R);
Empfangen (E50) mindestens einer Antwort (M2, M3, M4) auf die Anfrage (CD2), die mindestens einen Satz datierter Daten (B1, B2, B3) zu mindestens einem Datenpaket umfasst, wobei der mindestens eine Satz von einer zweiten Entität (S2) des mindestens einen zweiten Teilnetzes (R2) unter einer Vielzahl von Datensätzen zu Datenpaketen, die in dem mindestens einen zweiten Teilnetz befördert werden, in Abhängigkeit von der mindestens einen Zeitinformation und der mindestens einen Endgerätekennung ausgewählt wird.

2. Verfahren zum Erhalten nach Anspruch 1, bei dem die Anfrage (CD2) an die mindestens eine zweite Entität (S2) des mindestens einen zweiten Teilnetzes (R2) über ein zweites Kommunikationsnetz (RM) gesendet wird.

3. Verfahren zum Erhalten nach einem der vorhergehenden Ansprüche, **dadurch gekennzeichnet, dass** es einen Schritt des Erhaltens (E4) mindestens eines zweiten Satzes datierter Daten (A1, A2, A3, A4, A5) umfasst, die aus mindestens einem Datenpaket extrahiert werden, wobei das mindestens eine Paket von der ersten Entität (S1) des ersten Teilnetzes (R1) unter einer Vielzahl von Datenpaketen, die von mindestens einer Entität des ersten Netzes (R1) empfangen werden, in Abhängigkeit von der mindestens einen Zeitinformation und der mindestens einen Endgerätekennung ausgewählt wird, und einen Schritt des Ordnens (E54) der erhaltenen Sätze in Abhängigkeit von einem jedem Satz zugeordneten Datum.

4. Verfahren zum Erhalten nach Anspruch 3, bei dem mindestens ein Datum mindestens eines Satzes in Abhängigkeit von einer vorgegebenen Verschiebungsinformation (EC2) geändert wird.

5. Verfahren nach Anspruch 4, wobei die Bestimmung der Verschiebungsinformation (EC2) ein Senden (E64) eines gegebenen Signals an eine Entität eines Teilnetzes und ein Empfangen (E66) des von dieser Entität kommenden Signals umfasst.

6. Verfahren zum Erhalten nach Anspruch 5, bei dem das gegebene Signal beim Senden und Empfangen des Signals über mindestens ein Zwischenteilnetz befördert wird.

7. Verfahren zur Verarbeitung von Daten zu Datenpaketen, die während mindestens einer Kommunikation in einem Netz (R), das eine Vielzahl von Teilnetzen (R1, R2, R3 usw.) umfasst, ausgetauscht werden,
**dadurch gekennzeichnet, dass** es die folgenden Schritte umfasst, die von einer Entität (S2) eines zweiten Teilnetzes (R2) des Netzes (R) ausgeführt werden:

Empfangen (E20) einer Anfrage (CD2), die von einer Entität (S1) eines ersten Teilnetzes (R1) des Netzes (R) gesendet wird, wobei die Anfrage mindestens eine Zeitinformation (IT), die mindestens ein Zeitintervall definiert, und mindestens eine Endgerätekennung (IdA) für die mindestens eine Kommunikation umfasst;
Auswählen (E24) mindestens eines Satzes datierter Daten (B1, B2, B3) unter einer Vielzahl von Datensätzen zu Datenpaketen, die von mindestens einer Entität des zweiten Teilnetzes (R2) empfangen werden, in Abhängigkeit von der mindestens einen Zeitinformation und der mindestens einen Endgerätekennung;
Senden (E28) einer Antwort (M2) auf die Anfrage, welche den mindestens einen ausgewählten Datensatz umfasst, an eine Entität des ersten Teilnetzes.

8. Entität (S1) eines ersten Teilnetzes (R1) eines Kommunikationsnetzes (R), **dadurch gekennzeichnet, dass** sie umfasst:

eine Benutzeroberfläche (INT), die dazu konfiguriert ist, mindestens eine Zeitinformation (IT), die mindestens ein Zeitintervall definiert, und mindestens eine Endgerätekennung (IdA) für die mindestens eine Kommunikation zu erhalten;
ein Modul zum Senden einer Anfrage (CD2), welche die mindestens eine Zeitinformation und die mindestens eine Endgerätekennung umfasst, an mindestens eine zweite Entität (S2) mindestens eines zweiten Teilnetzes (R2) des Netzes (R); und
ein Modul zum Erhalten (OBT), das dazu konfiguriert ist, mindestens eine Antwort (M2) auf die Anfrage zu empfangen, die mindestens einen Satz datierter Daten (B1, B2, B3) zu mindestens einem Datenpaket umfasst, wobei der mindestens ein Satz von einer zweiten Entität (S2) des mindestens einen zweiten Teilnetzes (R2) unter einer Vielzahl von Datensätzen zu Datenpaketen, die in dem mindestens einen zweiten Teilnetz befördert werden, in Abhängigkeit von der mindestens einen Zeitinformation und der mindestens einen Endgerätekennung ausgewählt wird.

9. Entität (S2) eines zweiten Teilnetzes (R2) eines Kommunikationsnetzes, **dadurch gekennzeichnet, dass** sie umfasst:

ein Modul zum Empfangen (REC) einer Anfrage (CD2), die von einer Entität eines ersten Teilnetzes des Netzes (R) gesendet wird, wobei die Anfrage mindestens eine Zeitinformation (IT), die mindestens ein Zeitintervall definiert, und mindestens eine Endgerätekennung (IdA) für die mindestens eine Kommunikation umfasst;
ein Modul zum Auswählen (SEL) mindestens eines Satzes datierter Daten (B1, B2, B3) unter einer Vielzahl von Datensätzen zu Datenpaketen, die von mindestens einer Entität des zweiten Teilnetzes (R2) empfangen werden, in Abhängigkeit von der mindestens einen Zeitinformation und der mindestens einen Endgerätekennung; und
ein Modul zum Senden einer Antwort (M2) auf die Anfrage, welche den mindestens einen ausgewählten Datensatz umfasst, an eine Entität des ersten Teilnetzes.

10. Computerprogrammprodukt (PG1) mit Anweisungen zum Ausführen der Schritte eines Verfahrens zum Erhalten nach einem der Ansprüche 1 bis 6, wenn es von einem Prozessor geladen und ausgeführt wird.

11. Computerprogrammprodukt (PG2) mit Anweisungen zum Ausführen der Schritte eines Verarbeitungsverfahrens nach Anspruch 7, wenn es von einem Prozessor geladen und ausgeführt wird.

**Claims**

1. Method of obtaining data relating to data packets exchanged in the course of at least one communication in a network (R) comprising a plurality of sub-networks (R1, R2...),
**characterized in that** it comprises the following steps, implemented by a first entity (S1) of a first sub-network (R1) of said network (R):

   obtaining (E0) by means of a user interface, of at least one temporal information item (IT) defining at least one temporal interval and of at least one terminal identifier (IdA) for said at least one communication;
   transmission (E8) of a request (CD2) comprising said at least one temporal information item (IT) and said at least one terminal identifier (IdA), to at least one second entity (S2) of at least one second sub-network (R2) of said network (R);
   reception (E50) of at least one response (M2, M3, M4) to said request (CD2), comprising at least one set of dated data (B1, B2, B3) which relates to at least one data packet, said at least one set being selected by a second entity (S2) of said at least one second sub-network (R2) from among a plurality of data sets relating to data packets travelling in said at least one second sub-network, as a function of said at least one temporal information item and of said at least one terminal identifier.

2. Method of obtaining according to Claim 1, in which the request (CD2) is transmitted to said at least one second entity (S2) of said at least one second sub-network (R2) via a second communication network (RM).

3. Method of obtaining according to one of the preceding claims, **characterized in that** it comprises a step (E4) of obtaining at least one second set of dated data (A1, A2, A3, A4, A5) extracted from at least one data packet, said at least one packet being selected by said first entity (S1) of the first sub-network (R1) from among a plurality of data packets received by at least one entity of said first network (R1), as a function of said at least one temporal information item and of said at least one terminal identifier and a step (E54) of classing the sets obtained as a function of a date associated with each set.

4. Method of obtaining according to Claim 3, in which at least one date of at least one set is modified as a function of a predetermined shift information item (EC2).

5. Method according to Claim 4, in which the determination of said shift information item (EC2) comprises a transmission (E64) to an entity of a said sub-network of a given signal and a reception (E66) of said signal originating from said entity.

6. Method of obtaining according to Claim 5, in which during the transmission and the reception of said signal, said given signal travels via at least one intermediate sub-network.

7. Method of processing data relating to data packets exchanged in the course of at least one communication in a network (R) comprising a plurality of sub-networks (R1, R2, R3,...),
**characterized in that** it comprises the following steps, implemented by an entity (S2) of a second sub-network (R2) of said network (R):

   reception (E20) of a request (CD2) transmitted by an entity (S1) of a first sub-network (R1) of the network (R), said request comprising at least one temporal information item (IT) defining at least one temporal interval and at least one terminal identifier (IdA) for said at least one communication;
   selection (E24) from among a plurality of data sets relating to data packets received by at least one entity of said second sub-network (R2), of at least one set of dated data (B1, B2, B3), as a function of said at least one temporal information item and of said at least one terminal identifier;
   transmission (E28) destined for an entity of the first sub-network, of a response (M2) to the request comprising said at least one selected data set.

8. Entity (S1) of a first sub-network (R1) of a communication network (R), **characterized in that** it comprises:

   a user interface (INT) configured to obtain at least one temporal information item (IT) defining at least one temporal interval and at least one terminal identifier (IdA) for said at least one communication;
a module for transmitting to at least one second entity (S2) of at least one second sub-network (R2) of said network (R), a request (CD2) comprising said at least one temporal information item and said at least one terminal identifier; and
an obtaining module (OBT) configured to receive at least one response (M2) to said request, comprising at least one set of dated data (B1, B2, B3) which relates to at least one data packet, said at least one set being selected by a second entity (S2) of said at least one second sub-network (R2) from among a plurality of data sets relating to data packets travelling through said at least one second sub-network, as a function of said at least one temporal information item and of said at least one terminal identifier.

9. Entity (S2) of a second sub-network (R2) of a communication network, **characterized in that** it comprises:

a module (REC) for receiving a request (CD2) transmitted by an entity of a first sub-network of the network (R), said request comprising at least one temporal information item (IT) defining at least one temporal interval and at least one terminal identifier (IdA) for said at least one communication;
a module (SEL) for selecting from among a plurality of data sets relating to data packets received by at least one entity of said second sub-network (R2), at least one set of dated data (B1, B2, B3), as a function of said at least one temporal information item and of said at least one terminal identifier; and
a module for transmitting, destined for an entity of the first sub-network, a response (M2) to the request comprising said at least one selected data set.

10. Computer program product (PG1) comprising instructions for implementing the steps of a method of obtaining according to one of Claims 1 to 6, when it is loaded and executed by a processor.

11. Computer program product (PG2) comprising instructions for implementing the steps of a method of processing according to Claim 7, when it is loaded and executed by a processor.

<u>**Figure 1**</u>

**Figure 2**

E60 ⌇⌇ [ COM1 ]

[ COM1 ] ⌇⌇ E60

[ PV ] ⌇⌇ E62

E64 ⌇⌇ [ PS→ ] ────────────→

```
→PS
IP        ⌇⌇ E66
PS→
```

E68 ⌇⌇ [ CE(IY) ]

E70 ⌇⌇ [ CE → S2, S3, S4, S5 ] ────→

E72 ⌇⌇ [ PS1 ]

E74 ⌇⌇ [ TR1, TR2, TR3, TR4 ]

E76 ⌇⌇ [ EC1, EC2, EC3, EC4 ]

**Figure 3**

| S1 | S2 | S3 | S4 | S5 |
|----|----|----|----|----|
| H1 | T1 | T2 | T3 | V1 |
| H2 | T6 | T5 | T4 | V2 |

**Figure 4**

BD1

S1

| UT1 | μP | | CAP | | EXT | | GEN | | DIA | | OBT |

| ROM | | RAM | | FLT | | INT | | SEL | | TRI |
| PG1 |

DET

**Figure 5**

BD2

S2

| UT2 | μP | | CAP | | EXT | | REP | | DIA |

| ROM | | RAM | | FLT | | SEL | | TRM | | REC |
| PG2 |

**Figure 6**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012091642 A

**Littérature non-brevet citée dans la description**

- 3rd génération Partnership Project; Technical Aspects : Télécommunication management : Subscriber and equipment management; Trace data définition and management (release 9). *3GPP TS 32.423 V9.7.0,* Mars 2014